# EUROPÄISCHE PATENTSCHRIFT

(11) **EP 0 508 184 B1**
(45) Veröffentlichungstag und Bekanntmachung des Hinweises auf die Patenterteilung: **27.09.1995**
(21) Anmeldenummer: 92104862.5
(22) Anmeldetag: 20.03.1992
(51) Int. Cl.: C09B 1/54

(54) **Verfahren zur Herstellung und Reinigung von 1-Amino-2-phenoxy-4-hydroxy-anthrachinon**
Process for the preparation and purification of 1-amino-2-phenoxy-4-hydroxyanthraquinone
Procédé de préparation et de purification de la 1-amino-2-phenoxy-4-hydroxyanthraquinone

(30) Priorität: 11.04.1991 DE 4111827
(43) Veröffentlichungstag der Anmeldung: 14.10.1992
(73) Patentinhaber: BASF Aktiengesellschaft, 67063 Ludwigshafen (DE)
(72) Erfinder: Kohlhaupt, Reinhold, Dr., W-6710 Frankenthal (DE)

(56) Entgegenhaltungen:
- EP-A- 0 016 432
- DE-A- 3 400 747
- DE-A- 3 524 833
- FR-A- 1 478 769
- JOURNAL OF APPLIED CHEMISTRY OF USSR. Bd. 49, 10. Oktober 1976, NEW YORK US Seiten 946 - 947; Y.B.SHTEINBERG ET AL.: 'synthesis of phenoxy derivatives of anthraquinone in aqueous medium'

## Beschreibung

Die vorliegende Erfindung betrifft ein verbessertes Verfahren zur Herstellung von 1-Amino-2-phenoxy-4-hydroxyanthrachinon durch Umsetzung von 1-Amino-2-halogen-4-hydroxyanthrachinon mit Phenol in wäßriger Suspension bei pH-werten von 9 bis 13 und Temperaturen von 130 bis 160°C.

1-Amino-2-phenoxy-4-hydroxyanthrachinon stellt einen bedeutenden roten Dispersionsfarbstoff zum Färben von Polyestern dar und ist gleichzeitig auch ein Wichtiges Zwischenprodukt für die Herstellung weiterer Dispersionsfarbstoffe.

Seine Herstellung erfolgt bekanntermaßen durch Umsetzung von 1-Amino-2-halogen-4-hydroxyanthrachinon mit Phenol, entweder in organischen Lösungsmitteln, u.a. auch überschüssigem Phenol, die jedoch auf kostenintensive weise zurückgewonnen werden müssen, oder in wäßrig-alkalischen Reaktionsmedien.

Im letztgenannten Fall werden bei den bekannten Verfahren jedoch Dispergiermittel (Zh. Prikl. Khim. 49, S. 904 bis 905 (1976); englische über-Setzung: J. Appl. Chem. USSR 49, S. 946 bis 947 (1976)) bzw. zusätzlich noch Phasentransferkatalysatoren und Puffersubstanzen, vorzugsweise Phosphate (EP-A-16 432), Zugesetzt, wodurch ebenfalls eine Abwasseraufbereitung erforderlich wird.

Ein weiterer großer Nachteil dieser Herstellungsverfahren ist, daß das Produkt in Form von kugel- oder linsenförmigen Agglomeraten von etwa 0,5 bis 1,0 cm Durchmesser anfällt, die bei der weiteren Aufarbeitung nur schlecht filtriert und zudem nur schlecht von Verunreinigungen befreit werden können.

Die Reinigung des Rohproduktes erfolgt bekanntermaßen durch Umkristallisation, u.a. fraktionierte Umkristallisation aus Schwefelsäure, Sublimation oder Anrühren in einer Chlorlauge/Soda-Mischung.

Die genannten Reinigungsverfahren sind nicht nur mit hohen Ausbeuteverlusten verbunden und daher unwirtschaftlich, sondern sie ergeben den Farbstoff auch nur in unzureichender Reinheit, so daß Färbungen auf Polyester viel trüber und blauer ausfallen als es dem heutigen Stand entspricht.

Der Erfindung lag daher die Aufgabe Zugrunde, 1-Amino-2-phenoxy-4-hydroxyanthrachinon auf verfahrenstechnisch wirtschaftliche Weise in hoher Ausbeute in einer Form, welche die weitere Aufarbeitung des Rohproduktes ermöglicht, so herzustellen, daß die heutigen Reinheitsanforderungen ohne hohe Ausbeuteverluste erfüllt werden.

Demgemäß wurde ein Verfahren zur Herstellung von 1-Amino-2-phenoxy-4-hydroxyanthrachinon durch Umsetzung von 1-Amino-2-halogen-4-hydroxyanthrachinon mit Phenol in wäßriger Suspension bei pH-Werten von 9 bis 13 und Temperaturen von 130 bis 160°C gefunden, welches dadurch gekennzeichnet ist, daß man den pH-Wert des Reaktionsgemisches nach Beendigung der Reaktion, bei der Base verbraucht wird, auf 9,5 bis 11,5 einstellt, das Reaktionsprodukt von der flüssigen Phase abtrennt und anschließend mit alkalischer Hypochloritlösung wäscht.

Die Ausgangsverbindungen für das erfindungsgemäße Herstellungsverfahren 1-Amino-2-halogen-4-hydroxyanthrachinon, bevorzugt das Brom-Derivat und besonders bevorzugt das Chlor-Derivat, und Phenol werden in der Regel im Molverhältnis 1:1 bis 1:6, vorzugsweise 1:2,5 bis 1:4,5 eingesetzt. Dabei kann das Anthrachinon direkt in technischer Form mit einem Reingehalt von mindestens 93,5 Gew.-% verwendet werden.

Die wäßrige Suspension der Ausgangsverbindungen wird durch Zugabe einer Base, z.B. eines Alkalicarbonats wie Natrium- und Kaliumcarbonat oder besonders eines Alkalihydroxids wie Kalium- und vor allem Natriumhydroxid, vorzugsweise in Form seiner wäßrigen etwa 50 gew.-%igen Lösung, alkalisch gestellt. Dabei beträgt das Gewichtsverhältnis der bevorzugten Komponenten 1-Amino-2-chlor-4-hydroxyanthrachinon zu Natriumhydroxid in der Regel 1:0,1 bis 1:0,5, bevorzugt 1:0,2 bis 1:0,4, wodurch sich für die wäßrige Mischung ein pH-Wert von im allgemeinen 9 bis 13 ergibt. Da bei der Reaktion Base verbraucht wird, liegt nach beendeter Reaktion im allgemeinen ein pH-Wert von 9,2±0,2 vor.

In der Regel führt man die Reaktion bei 130 bis 160°C, vorzugsweise bei 140 bis 150°C durch. Dabei stellt sich gleichzeitig ein Druck von in der Regel 3 bis 6 bar, vorzugsweise von 3,5 bis 4,5 bar ein.

Verfahrenstechnisch geht man im allgemeinen so vor, daß man die Mischung in einem druckfesten Reaktor innerhalb von etwa 1 bis 2 h auf die gewünschte Temperatur erhitzt und dann etwa 10 bis 14 h bei dieser Temperatur rührt, wonach die Reaktion in der Regel beendet ist (Nachweis durch Dünnschichtchromatographie).

Beim erfindungsgemäßen Herstellungsverfahren wird der pH-Wert des Reaktionsgemisches nach beendeter Reaktion auf in der Regel 9,5 bis 11,5, bevorzugt 10 bis 11 eingestellt.

Zweckmäßigerweise wird das Reaktionsgemisch dazu zunächst auf in der Regel 60 bis 90°C, bevorzugt 70 bis 80°C abgekühlt. Dann wird eine Base, vorzugsweise ein Alkalihydroxid wie Kalium- und vor allem Natriumhydroxid, bevorzugt in etwa 40 bis 60 gew.-%iger wäßriger Lösung, zugegeben. Das Reaktionsgemisch wird dann noch in der Regel 1 bis 4 h, vorzugsweise 2 bis 3 h bei dieser Temperatur gerührt.

Erstaunlicherweise klumpt das erfindungsgemäß erhaltene Rohprodukt nicht, sondern fällt in gut filtrierbarer Form an, so daß es durch Filtration von der wäßrigen Phase abgetrennt und dann nach dem waschen mit etwa 60 bis 70°C heißem Wasser bis zum nahezu farblosen Ablauf weiter gereinigt werden kann.

Bei dem anschließenden Reinigungsschritt wird das Rohprodukt mit alkalischer Hypochloritlösung, vorzugsweise Alkalihypochlorit wie Kalium- und vor allem Natriumhypochlorit, gewaschen, die einen Gehalt an aktivem Chlor von in der Regel 1 bis 6 Gew.-%, bevorzugt 2 bis 4 Gew.-%, und eine Temperatur von im allgemeinen 10 bis 50°C, vorzugsweise 20 bis 40°C, hat ("verdünnte Chlorbleichlauge"). Das Gewichtsverhältnis von Natriumhypochloritlösung zu 1-Amino-2-phenoxy-4-hydroxyanthrachinon beträgt in der Regel 0,5:1 bis 3:1, bevorzugt 1:1 bis 2:1.

Besonders günstig ist dreimaliges Waschen mit Hypochloritlösung mit jeweils zwischengeschaltenem Waschen mit etwa 60 bis 70°C heißem Wasser bis zum nahezu farblosen Ablauf und zum Schluß bis zum neutral gewaschenen Produkt, wodurch sehr hohe Produktreinheiten erzielt werden können.

Bei diesem Reinigungsverfahren können auch 1-Amino-2-phenoxy-4-hydroxyanthrachinon-Rohprodukte eingesetzt werden, die durch Umsetzung von 1-Amino-2-halogen-4-hydroxyanthrachinon mit Phenol in organischen Lösungsmitteln erhalten worden sind.

Mit Hilfe des erfindungsgemäßen Herstellungsverfahrens erhält man 1-Amino-2-phenoxy-4-hydroxyanthrachinon auf verfahrenstechnisch wirtschaftliche Weise in sehr hohen Ausbeuten von 96 bis 99 % und in außerordentlich hohen Reinheiten um 98,5 %.

### Beispiel 1

In einem 1 l-Reaktor aus Edelstahl wurden unter Rühren 288 g Wasser, 40 g einer 50 gew.-%igen Natronlauge, 87,5 g (0,93 mol) Phenol und 82,4 g 93,5 gew.-%iges 1-Amino-2-chlor-4-hydroxyanthrachinon (77 g (0,28 mol) berechnet auf 100 Gew.-%) vorlegt. Nach druckdichtem Verschließen des Reaktors wurde das Reaktionsgemisch in etwa 1,5 h auf 150°C erhitzt, wobei sich ein Druck von 4 bis 4,5 bar aufbaute. Das Reaktionsgemisch wurde nach 12 stündigem Rühren auf 70°C abgekühlt, und der Reaktor wurde entspannt.

Der pH-Wert des Reaktionsgemisches, in dem durch Dünnschichtchromatographie kein 1-Amino-2-chlor-4-hydroxyanthrachinon mehr nachzuweisen war, lag bei 9,2 und wurde durch Einrühren von 42 g 50 gew.-%iger Natronlauge auf 11 angehoben. Die Suspension wurde dann noch 2 h bei 70°C gerührt. Der Niederschlag wurde bei 70°C abfiltriert und anschließend mit etwa 70°C heißem Wasser bis zum nahezu farblosen Ablauf gewaschen.

Danach wurde dreimal mit jeweils 120 g einer verdünnter Chlorbleichlauge mit einem Gehalt von 2 Gew.-% aktivem Chlor und einer Temperatur von 25°C gewaschen, wobei nach jeder Bleichlaugenwäsche mit etwa 70°C heißem Wasser bis zum nahezu farblosen Ablauf und zum Schluß neutral gewaschen wurde. Das Produkt wurde anschließend 16 h bei 100 bis 120°C getrocknet.

Es wurden 89,0 g 1-Amino-2-phenoxy-4-hydroxyanthrachinon mit einem durch HPLC bestimmten Reingehalt von 98,5 % erhalten, was einer Ausbeute von 95,5 % entspricht.

Der erhaltene Dispersionsfarbstoff färbte Polyester mit einer außergewöhnlich hohen Reinheit.

### Beispiel 2

Die Umsetzung und die Reinigung des Reaktionsproduktes erfolgten analog zu Beispiel 1. Nach beendeter Reaktion wurde der pH-Wert des Reaktionsgemisches jedoch durch Zugabe von 25 g 50 gew.-%iger Natronlauge nur auf 10 angehoben.

Es wurden 91,8 g 1-Amino-2-phenoxy-4-hydroxyanthrachinon mit einem Reingehalt von 98,5 % erhalten, was einer Ausbeute von 98,5 % entspricht.

Der erhaltene Farbstoff färbte Polyester ebenfalls mit einer außergewöhnlich hohen Reinheit.

## Patentansprüche

1. Verfahren zur Herstellung von 1-Amino-2-phenoxy-4-hydroxyanthrachinon durch Umsetzung von 1-Amino-2-halogen-4-hydroxyanthrachinon mit Phenol in wäßriger Suspension bei pH-Werten von 9 bis 13 und Temperaturen von 130 bis 160°C, dadurch gekennzeichnet, daß man den pH-Wert des Reaktionsgemisches nach Beendigung der Reaktion, bei der Base verbraucht wird, auf 9,5 bis 11,5 einstellt, das Reaktionsprodukt von der flüssigen Phase abtrennt und anschließend mit alkalischer Hypochloritlösung wäscht.

2. Verfahren nach Anspruch 1, dadurch gekennzeichnet, daß die alkalische Hypochloritlösung einen Gehalt an aktivem Chlor von 1 bis 4 Gew.-% hat.

## Claims

1. A process for preparing 1-amino-2-phenoxy-4-hydroxyanthraquinone by reacting a 1-amino-2-halo-4-hydroxyanthraquinone with phenol in aqueous suspension at pH 9-13 and 130-160°C, which comprises, after the reaction, in which the base is consumed, has ended, adjusting the pH of the reaction mixture to 9.5-11.5, separating the reaction product from the liquid phase and then washing it with alkaline hypochlorite solution.

2. A process as claimed in claim 1, wherein the alkaline hypochlorite solution has an active chlorine content of from 1 to 4% by weight.

## Revendications

1. Procédé de préparation de 1-amino-2-phénoxy-4-hydroxyanthraquinone par réaction de 1-amino-2-halogéno-4-hydroxyanthraquinone avec du phénol en suspension aqueuse à un pH de 9 à 13 et à une temperature de 130 à 160°C, caractérise en ce qu'après l'achèvement de la réaction, au cours de laquelle une base est consommée, on règle le pH du mélange réactionnel à une valeur de 9,5 à 11,5, le produit de la réaction est séparé de la phase liquide, puis lavé avec une solution d'hypochlorite alcaline.

2. Procédé selon la revendication 1, caractérisé en ce que la solution d'hypochlorite alcaline a une teneur en chlore actif de 1 à 4% en poids.
